# EUROPEAN PATENT APPLICATION

(11) **EP 2 568 591 A1**
(43) Date of publication of application: **13.03.2013**
(21) Application number: 11384201.7
(22) Date of filing: 12.09.2011
(51) Int. Cl.: H02M 7/49, H02M 7/487

(54) **Multilevel-clamped multilevel converters (MLC2)**

(71) Applicant: Green Power Technologies, S.L., 41110 Bollullos de la Mitación Sevilla (ES)
(72) Inventor: Rodriquez, Pedro, 08222 Terrassa-Barcelona (ES); Dias Bellar, Maria, CEP 20231-048, RJ (BR); Muñoz Aguilar, Raúl Santiago, 08226 Terrassa-Barcelona (ES); Busquets Monge, Sergio, 08021 Barcelona (ES)

(57) **Abstract**

The present invention discloses the ***multilevel-clamped multilevel converter* (MLC²)**. In this invention the multilevel clamping concept is devised, whereby a DC bus voltage, comprised of multiple DC bus voltage nodes, is managed by one or more ***multilevel clamping units* (MCUs)** to convey a higher number of levels for synthesizing the output waveforms of a DC-AC multipoint clamped **(MPC)** power conversion structure. Thus the resultant converter has the number of levels increased when compared with conventional **MPC** multilevel solutions, which is very important for improving power quality, while the overall structure is kept simple, wherein the number of components can be considerably reduced.

## Description

### Background of the Invention

### 1. Field of the Invention

This invention relates to the field of direct current (DC) to alternating current (AC) power electronics conversion by means of voltage source multilevel power converters, mainly for high power applications.

Multilevel voltage source converters have been the most suitable power electronics approach for high power applications. In these converters, the higher the number of voltage levels in the output voltage waveforms, the more the harmonic components are reduced and power quality is improved. This promotes a beneficial impact to the power ratings of transformer and filter designs when it is required to downsize them. Such aspect has become crucial for grid-connected power system applications since power converter manufacturers have to comply with rigorous power quality standards that have been imposed by utility regulators. Usually, such improvement on the number of levels comes at the expense of a substantial increase in the component count of the power converter, highly noticeable for multiphase electrical systems, which include three-phase systems, or otherwise by adding very complex circuitry and controls.

The present invention deals with a multiphase multilevel-clamped multilevel converter (**MLC²**) wherewith a higher number of levels in the output voltage can be achieved without excessive part count and additional complexities, which makes it suitable for three-phase systems or other multiphase systems. This invention is based on the usage of the multilevel clamping unit (**MCU**), which is an extra circuit arrangement, wherewith additional voltage levels can be conveyed to the clamping points of a DC-AC MPC power converter, and thus the overall number of levels can be raised at the output voltage waveforms. All of these features, besides the simplicity and modularity, establish this invention as a good solution for high power conversion applications.

### 2. Description of the Prior Art

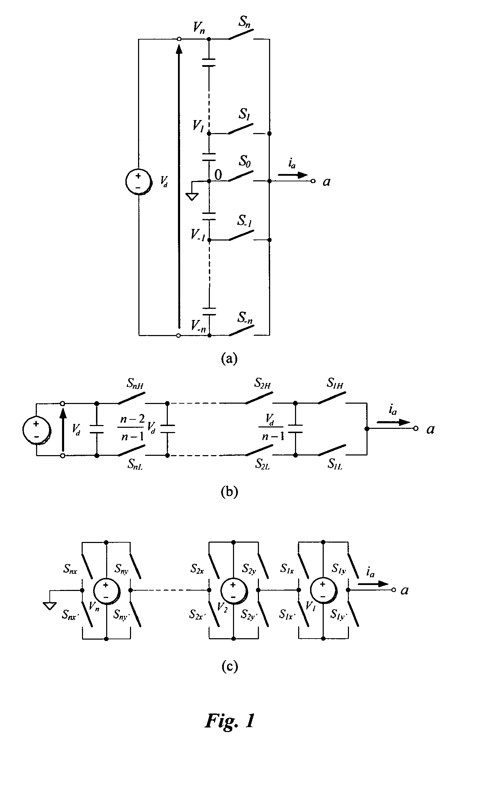

Multilevel (**ML**) converters have been broadly classified into three main groups [1]-[4]: the diode-clamped multilevel (**DCML**) converter or the multipoint-clamped (**MPC**) converter *(****Fig**. **1(a)*****)** [5]-[8]; the capacitor-clamped multilevel converter (**CCMC**) or flying capacitor multilevel converter (**FCMC**), in ***Fig. 1(b)*** [9]; and the cascade multilevel or cascaded H-bridge (**CHB**) multilevel converter (***Fig. 1(c)*****)** [10]. In ***Figs**. **1(a)******-(c),** V*_{d} represents the total DC bus voltage and n is the voltage level index; and in ***Fig. 1(c)******,** V*₁*,* ..., *V*ₙ are independent DC voltage sources for generating n voltage levels. Other multilevel converter topologies, such as the modular multilevel converter employing half bridges [11]-[13], and hybrid combinations of the basic three groups, have also been proposed in the literature in the last years [14], [15]. In all of these modalities, there has been continuous development in order to outcome better performance features and reduced costs, which generally imply higher number of output voltage levels [16], reduced part count and simple structure [17]. However, the attempts to increase the number of levels have so far resulted in large and bulky converters or either in more design complexities. On this matter, it has been well known the achieved large number of clamping diodes and power switches, in the case of the **DCML**; and the increased number of capacitors with different Volt-Ampere specifications, besides some specific control complexities due to their charging procedures, in the case of the **FCMC** [18]; and the required *n* independent DC voltage sources for synthesizing 2*n*+1 output voltage levels, which also depends on the number of output phases, for the **CHB** case [19]. This means that, for example, nine separate DC voltage sources must be taken up to accomplish the seven-level three-phase **CHB**. Moreover, complex front-end transformers may be required to generate those independent DC sources, which impose restrictions for some applications.

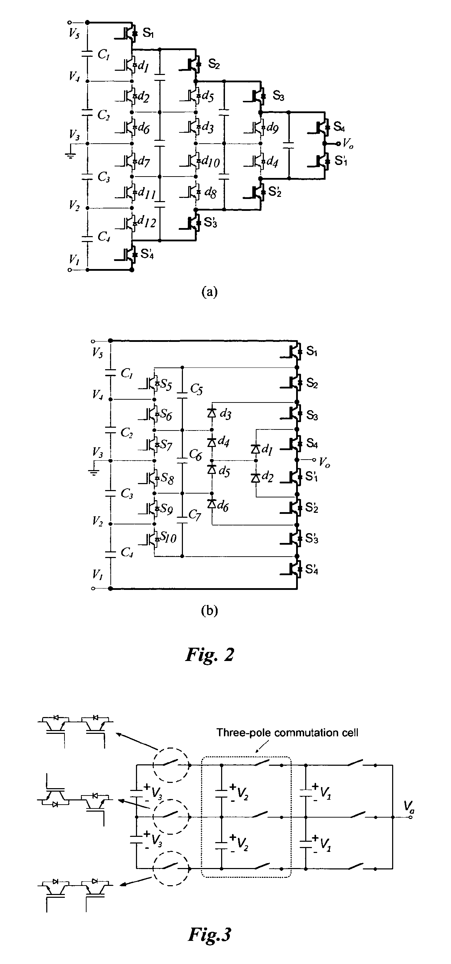

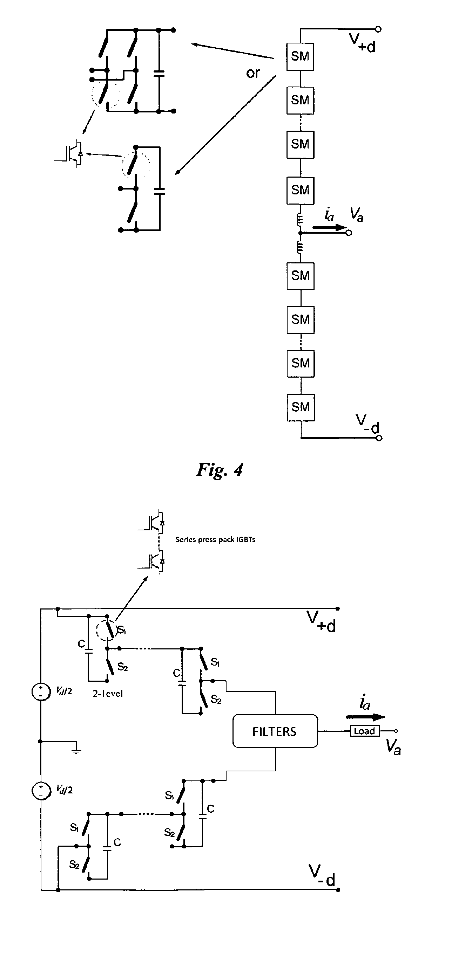

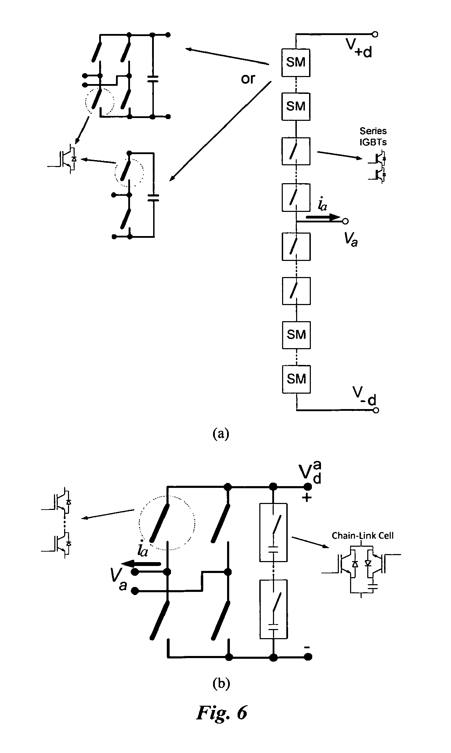

Other topology approaches which do not prioritize reducing parts count but are worth mentioning are the following:
*i)* The generalized multilevel inverter topology (in ***Fig. 2(a)*** only one phase leg is shown) gathers up **FCMC**, **DCML**, and **CHB** features [3], [20] and it mainly has been proposed for the sake of mitigating the voltage unbalancing problem commonly encountered in all three main types of multilevel inverters (**DCML**, **FC** and **CHB**). A further development on that has been reported in [21] and is shown in ***Fig**. **2(b)****.* Yet, it can be seen that both approaches require many parts per phase.
*ii)* The stacked multicell converter (**SMC**) in [22] is based on FC associated to the three-pole commutation cell, or the three-switch approach. ***Fig. 3*** illustrates one phase leg of a 7-level **SMC** converter. One can see that the more the number of cells, the more the number of levels (*V*₁*, V*₂*, V*₃, etc.) is obtained. In spite of the non-existence of clamping diodes in this approach, since each switch in ***Fig.* 3** is typically implemented with two power semiconductor switches connected in series, this means that the required number of power switches is large. Besides, more capacitors with different voltage ratings (*V*₁, *V*₂, and *V*₃ in ***Fig.* 3**) are needed which also add to the control complexity.
*iii)* In the modular multilevel converter **(M²LC** or **M²C)** the cascade concept is applied to H-bridge or half-bridge switching cells, or sub-modules (**SM** in ***Fig. 4***)*,* but with a common DC link voltage [4], [11], [12], [23], [24]. By using this concept, eight sub-modules per phase leg (or 4 **SM** per arm) are required for composing a 5-level M²C [24]. One can notice that a large number of power semiconductor switches and capacitors are required.
iv) A modular multilevel type of converter (one phase leg is shown in ***Fig. 5***)*,* the cascaded two-level (**CTL**) converter, based on cascading two-level switching cells, has been proposed in [25]. In this circuit configuration, each IGBT is in fact a valve composed of series-connected press-pack IGBTs. Low harmonic magnitudes are obtained mostly at 1% of the fundamental component. However, owing to its staggered switching operation, many two-level cells are required per phase leg in order to achieve high switching frequency and to split the DC bus voltage as well. For example, 76 two-level cells per phase for operating at 11.4 kHz can be a typical case. Moreover, additional low frequency filtering is required, due to 2^{nd} harmonic circulating currents through the cell capacitors, and also other capacitor for high frequency attenuation.
v) Other hybrid multilevel topologies, which combine series-connected IGBTs with the modular multilevel concept, have been proposed [26]-[28]. In [26], the series-connected IGBTs are switched by zero voltage switching (**ZVS**), and the number of required sub-modules (SM, in ***Fig. 6(a)*****)** is approximately half of those required for an equivalent **M²C** (***Fig. 4*****)***.* Consequently, the number of DC capacitors is cut out by half of that in the conventional modular approach. The single-phase arrangement shown in ***Fig. 6(b)*** combines the series-connected IGBTs with cascaded Chain-Link cells [27], [28]. Yet, both topologies operate with a large number of components. Reference [27] reports ten Chain-Link cells per-phase have been used.

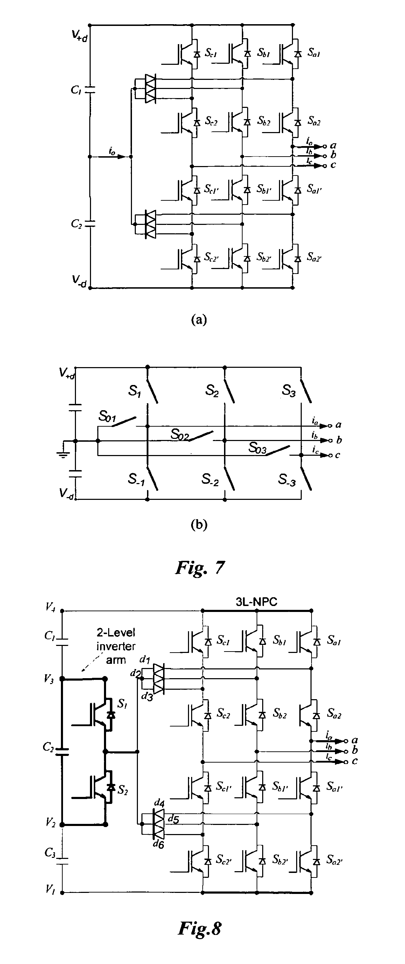

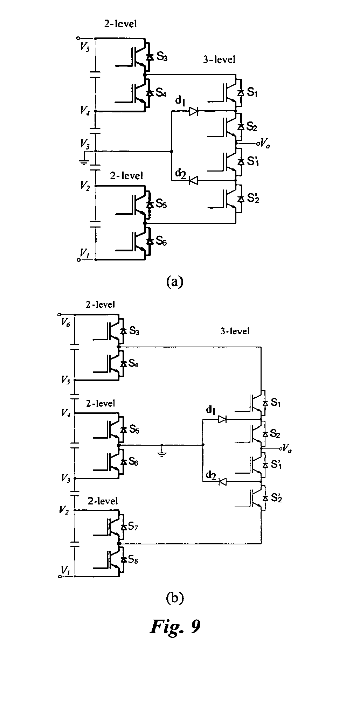

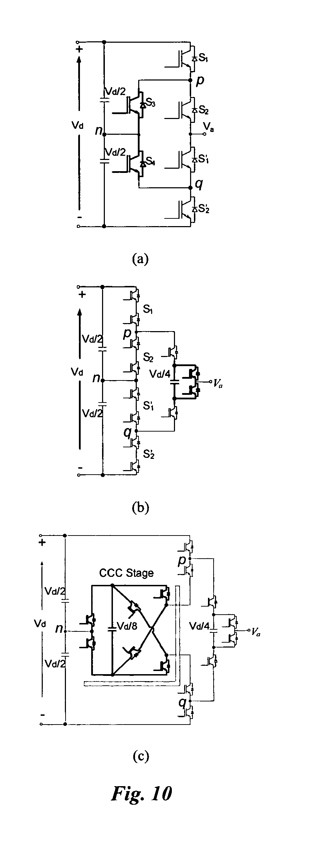

Nevertheless, amongst the numerous **ML** topologies published over the past two decades, the three-level (**3L**) **DCML** converter, or the so-called neutral-point-clamped (**NPC**) converter (***Fig. 7***)*,* has been the most favourable approach of power electronics for medium voltage (**MV**) high power applications in the market [29]. The **NPC** technology has achieved modularity and robustness, which led to standard industrial products. They are combined in series-connected or parallel-connected converters to form up high power systems in the megawatt range [30], [31]. On account of that, some efforts have been undertaken for improving the **NPC** technology, while having its parts reduced, and yet preserving its main structure, which has been reported in the literature and are briefly described in the following:
*i)* There have been some works on combining inverter arms with different levels to accomplish a higher multilevel structure. In [32], a two-level inverter arm and a three-phase three-level **NPC** are combined to form a four-level inverter (***Fig. 8***). The resultant structure has reduced parts when compared to its classical **NPC** counterpart. Further steps on this idea are the five-level and seven-level topologies proposed in [33] and [34] and showed in ***Figs. 9(a) and 9(b)*** (one phase leg only), respectively. The amount of clamping diodes is significantly reduced, when compared to their classical **NPC** counterparts. However, although the DC bus capacitors are shared by all phase legs for a three-phase system, each phase leg must have its own set of 2-level arms (or 2-level cells). Therefore, the number of power controlled switches is the same as those of their classical **NPC** counterparts.
*ii)* Recent developments on the active neutral-point-clamped **(ANPC)** technology have been discussed in [2], [29], and are shown in ***Fig. 10******.*** By associating a 3L-NPC leg (***Fig. 10(a)*****)** with a 3L-FC power cell a five-level hybrid structure, capable to provide voltage levels ±*V*_{d}/2, ±*V*_{d/}4 and zero, is obtained (***Fig. 10(b)*****)** which has been called 5L-ANPC [35], [36]. The series-connected switches *S₁, S*₂ and *S'₁*,*S'*₂ indicate the blocking voltage differences if devices of the same type are used. In ***Fig. 10(c)*** a hybrid 9L-**ANPC** converter is presented [37]. It is composed of the hybrid 5L-ANPC combined with the common cross connected stage (**C³S**), which is based on the cross-connected intermediate level **(CCIL)** concept introduced in [38]. The voltage of the **C³S** capacitor can be added to the **FC** voltage and increase the ability to produce more levels. If the **C³S** voltage is at *V*_{d}/8 (***Fig. 10(c)*****)** levels ±*V*_{d}/2, ±3 *V*_{d}/8,± *V*_{d}/4, ± *V*_{d}/8 and zero are generated to produce a nine-level phase voltage *Vₐ*. The **C³S** circuit can be shared by all three phases, which results in a remarkable reduction on parts count when compared with the classical counterpart.

If one considers the structure of ***Fig. 10(b)*** plus **C³S** for a three-phase converter, it will require 12 switches per phase and 6 capacitors, which contrasts with the 16 switches and 14 clamping diodes per phase and 8 capacitors of the classical **NPC** counterpart. However, all of these benefits come at the expense of more complex circuitry and controls, which also occur to the **5L-ANPC** topology, since the balancing strategy for both the **CCC** and the **FC** stages must take their different voltage ratings into account, as alike as the **SMC** converter case.

### Summary of the Invention

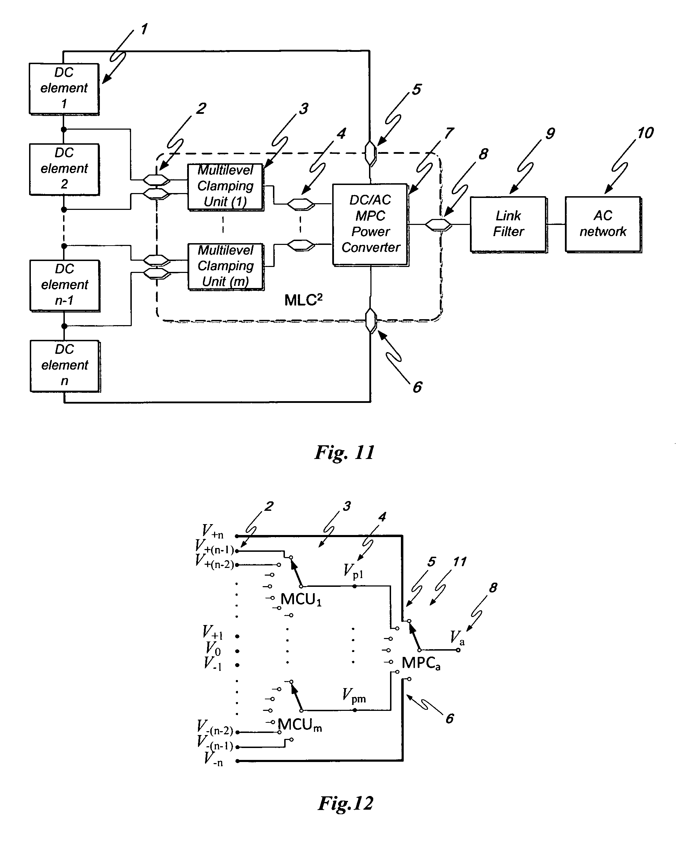

The block diagram describing the general structure of the multilevel-clamped multilevel converter **(MLC²),** which is **the main object of this invention**, is presented in ***Fig. 11****.* The **MLC**² is based on the **multilevel clamping concept**, which confers a multilevel feature to the clamping points of a DC-AC multipoint-clamped (**MPC**) power conversion structure by using an expandable arrangement of multilevel clamping units **(MCUs**). In a conventional DC-AC **MPC** power converter, the voltage nodes of the DC bus are directly connected to the clamping points of the **MPC** power converter. In such converters, the voltage levels at the AC side are defined by the voltage level of the clamping points plus the two additional levels provided by the positive and negative DC bus rails. Therefore, to increase the number of levels of the output waveforms synthesized by conventional converters, it is necessary to expand the number of clamping points connected to the DC bus voltage nodes, which results in complex power converters with large part count and design complexities. As ***Fig. 11*** shows, the **MLC²** uses the **MCUs** {*3*} as interfaces between the DC bus voltage nodes {*2*} and the **MPC** power converter clamping points {*4*}. In this manner, multiple voltage levels are conveyed to each of the **MPC** power converter clamping points {*4*}. As a result, the DC-AC **MPC** power conversion structure {*7*} can be simplified to generate a given number of voltage levels at its AC output {*8*} when compared with a conventional **MPC** multilevel solution. In the **MLC²,** the AC side voltage levels of the **MPC** power conversion structure are defined by the two levels provided by the positive {*5*} and negative {*6*} DC bus rails plus an expandable number of levels resulting from the product between the number of clamping points {*4*} and the number of voltage levels managed by the **MCUs** {*3*}. Therefore, the multilevel clamping concept allows synthesizing a high number of voltage levels in the output voltage waveforms by using well known **MPC** power converter topologies available in the market, for example three-level neutral-point clamped (**NPC**) topologies, to reduce voltage harmonic components at the AC side, which allow simplifying the link filter design {*9*} and improve power quality in the connection to the AC grid {*10*}.

The multilevel clamping concept is illustrated in ***Fig.* 12****.** In this figure, a set of **MCUs** {*3*} is connected to the clamping points {*4*} of one of the phase-legs {*11*} of a DC-AC **MPC** power converter {*7*}. The clamping points correspond to one or more available mid-points that commonly form up the power switch legs {*11*} of DC-AC **MPC** power converters. The number of clamping points depends on the topology of the **MPC** power converter. Each **MCU** is a dedicated circuitry which conveys multiple voltage levels to the clamping points of the **MPC** power converter, whereby the basic idea of the multilevel clamping method is stated. Considering that each **MCU** of ***Fig. 12*** can manage *l* voltage levels, the phase-leg of the DC-AC **MPC** power converter with m clamping points can synthesize an output voltage with (*m* x *l* + 2) voltage levels.

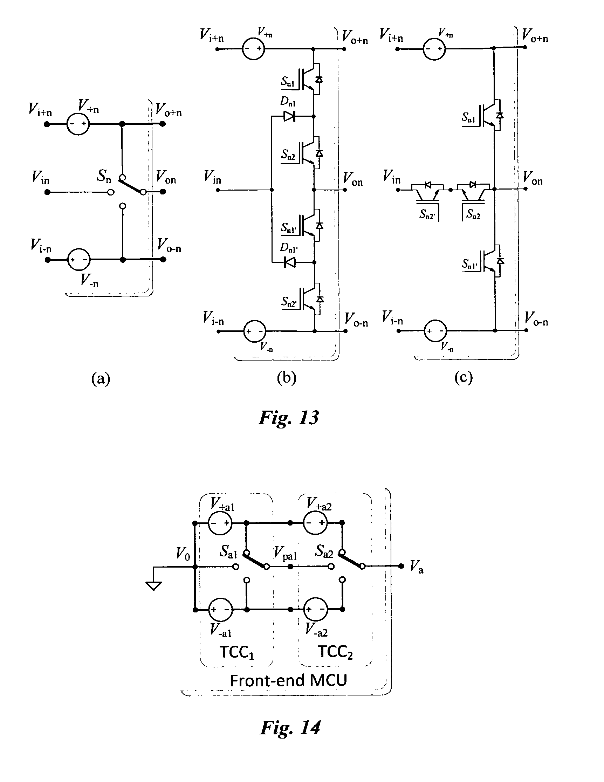

The essential building block of the **MCU** is the ***three-level clamping cell* (TCC)**, which is presented in ***Fig. 13(a)******.*** The **TCC** is a three-input/three-output circuit composed of power switches, connected in a single-pole/triple-throw type of arrangement, and a pair of DC sources, connected between the input and the output terminals to increase by two the number voltage levels managed by the **MCU**. Power semiconductor switches of the same kind as those commonly employed in high power converters available in the market can be utilized for implementing the **TCC.** ***Fig. 13(b)*** shows a practicable implementation of the **TCC** based on a well-known single-phase three-level neutral-point clamped (**NPC**) topology. Likewise, ***Fig. 13(c)*** presents another feasible implementation of the **TCC** based on a single-phase three-level neutral-point piloted (NPP) topology [39]. The piloted output terminal of the **TCC** of ***Fig. 13(a)*** can take the *V*ₒ₊ₙ, *V*ᵢₙ, and *V*ₒ₋ₙ voltage levels as a function of its switching state. A **MCU** can consist of several series-connected **TCCs.** The higher number of series-connected **TCC** the higher number of voltage levels managed by the **MCU** and, in turn, the higher number of voltage levels in the synthesized waveforms by the **MLC²,** which strengthen the expandable and modular features of this invention.

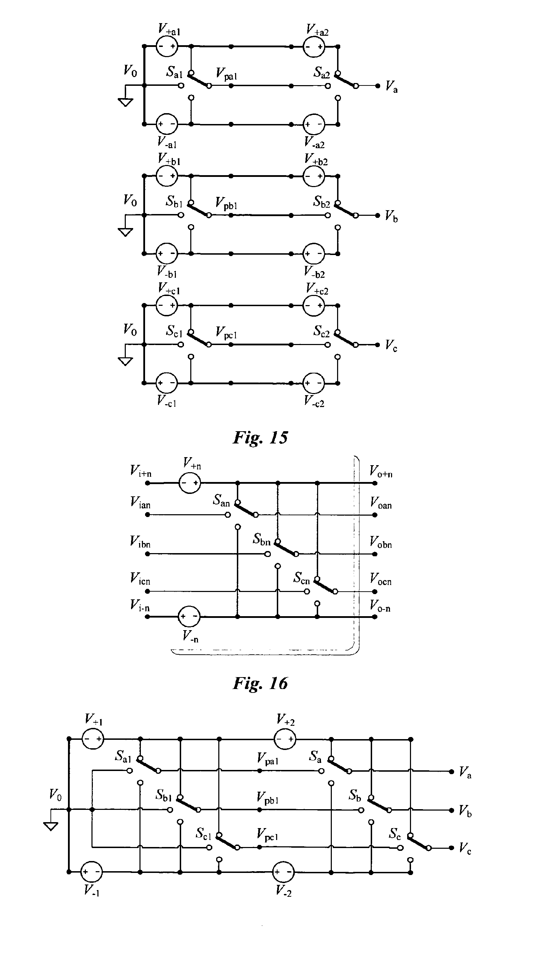

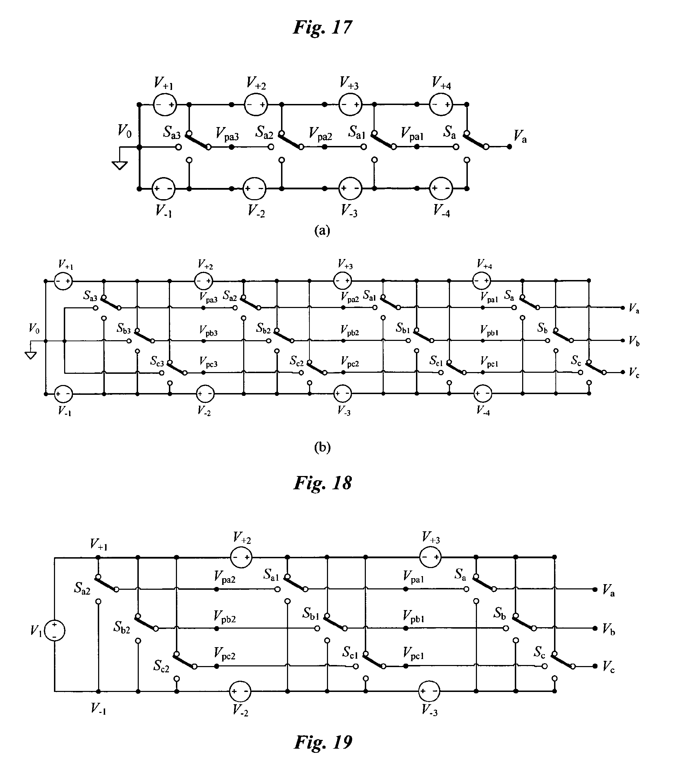

As already mentioned, the main objective of a **MCU** is to convey multiple voltage levels to one of the clamping points of a **MPC** power conversion structure performing as a front-end stage in the connection to the AC grid. However, the **MCU** can also act as a DC-AC front-end power converter by itself. ***Fig.* 14** shows a **MCU,** formed by two **TCCs,** performing as a single-phase 5-level **MLC².** By replicating the circuit of ***Fig. 14*** for each of the phases of a three-phase system, a three-phase 5-level **MLC²** scheme can be derived without difficulty as shown in ***Fig. 15******.*** Moreover, if assumed that the value of the DC voltage sources forming the **TCCs of** ***Fig. 15*** is the same for all of the three phases, a three-phase three-level clamping cell **(TTCC)** can be arranged as illustrated in ***Fig. 16******.*** In the **TTCC,** two DC sources connected between the DC bus input and the output terminals, and three sets of power switches are structured to form per-phase single-pole/triple-throw type switches sharing common DC bus rails. The **TTCC** is the building block of three-phase **MLC²** and can be straightforwardly implemented from the standard 3-level **NPC** power conversion topology by just enabling independent clamping points for each one of the three phases. ***Fig. 17*** shows the scheme of a three-phase 5-level **MLC²** drawn up from the series connection of two **TTCCs.** This figure stands out the modular feature of the **MLC²** concept to implement multilevel converters from the series connection of simple power conversion topologies. This modular concept can be expanded to higher number of levels. For instance, ***Fig. 18(a)*** shows a single-phase modular 9-level **MLC²** made by combining four series-connected **TCCs,** while ***Fig. 18(b)*** shows the three-phase version of the 9-level modular **MLC²** by arranging four series-connected **TTCCs.** One must note that the modular **MLC²** entails parts count reduction in respect to other conventional **MPC** power converter implementations, e.g., if the **TTCCs** of ***Figs. 17*** and ***18(b)*** are implemented by using a three-level neutral-point clamped (NPC) topology, like the one shown in ***Fig. 13(b)******,*** 36 power switches (24 IGBTs and 12 clamping diodes) are required for the three-phase 5-level **MLC²** and 72 switches (48 IGBTs and 24 clamping diodes) for the three-phase 9-level **MLC².** This is an advantageous parts reduction if one compares with the 42 switches (24 IGBTs and 18 clamping diodes) and 96 switches (54 IGBTs and 42 clamping diodes) utilized for making the classical 5-level **NPC** and 9-level **NPC,** respectively. To generate an even number of voltage levels at the output of a modular **MLC²** it is just necessary to connect in series a two-level power conversion stage. As an example, ***Fig. 19*** shows the scheme of a modular three-phase 6-level **MLC².** based on two series-connected **TTCCs** and one three-phase two-level full-bridge **(TTFB).**

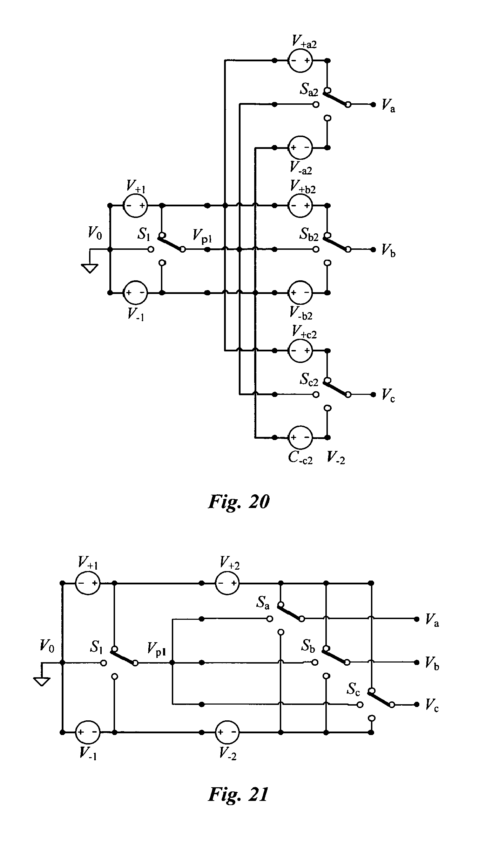

The **MLC²** concept can be also implemented by using a ***common clamping*** approach, which deals with sharing the output of a given **MCU** with more than one clamping point of the **MPC** power conversion structure. In this manner, ***Fig. 20*** shows the scheme of a three-phase 5-level **MLC²** based on the common clamping approach. In this converter, the three **TCCs** performing as DC-AC front-end stages have their input terminals interconnected, whereby the common clamping approach stands out. The voltage level of the common clamping point *V*ₚ₁ is set by a fourth **TCC** which is shared by the three phase-legs. As a result, the multilevel converter obtained by implementing the common clamping concept has significantly reduced parts count, which features the simple design and modularity characteristics of this invention. By assuming that the value of the DC voltage sources of the three front-end **TCCs** of ***Fig.* 20** is the same for all of them, they can be replaced by a common clamped front-end **TTCC,** which results in the very simple design shown in ***Fig. 21******.*** It is worth to point out that the topology of the common clamped front-end **TTCC** of ***Fig. 21*** is almost the same as the one for the standard three-phase 3-level **NPC** power converter except that, the DC bus mid-point is opened and new voltage nodes are included in this case, which reinforces the simplicity character of the **MLC²** concept to implement high order multilevel converters. If both the **TCC** and the **TTCC** of ***Fig. 21*** are implemented by using 3-level **NPC** arms like the one shown in ***Fig. 13(b)******,*** the total number of parts count is significantly reduced (16 power switches and 8 diodes) when compared with the classical 5-level **NPC** counterpart (24 power switches and 18 clamping diodes). The fact that all the three-legs of the 5-level **MLC²** of ***Fig. 21*** share a common clamping point reduces the number of voltage vectors that can be generated by this power converter when compared with the conventional 5-level **NPC.** However, the use of a properly designed PWM algorithm allows achieving harmonic distortion levels close to those of the conventional 5-level **NPC** with a significant reduction in the cost of the power converter.

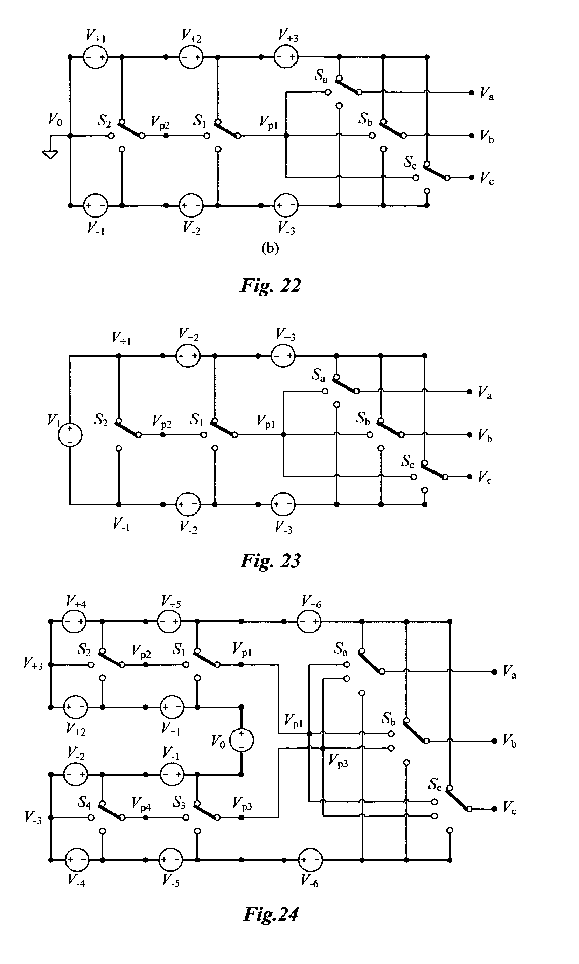

The expandable and modular feature of the **MLC²** concept is highlighted in the design of the 7-level **MLC²** with common clamping shown in ***Fig. 22******.*** In this circuit scheme, the power converter structure is the same as in the 5-level **MLC²** of ***Fig. 21*** except that, the **MCU** has been expanded by adding an extra series-connected **TCC.** Similarly, as shown in ***Fig. 23******,*** a two-level half-bridge **(THB)** can be connected in series to the 5-level **MLC²** of ***Fig. 21*** to implement a 6-level **MLC²** with common clamping. Yet another example of the **MLC²** concept with common clamping is illustrated in ***Fig. 24******.*** In this case, the voltage levels of the two clamping points of a three-phase 4-level DC-AC **MPC** power converter are managed by two 5-level **MCUs,** consisting of two **TCCs** each of them. This configuration yields to a 12-level **MLC²*.*** It is important to mention that if the **MCUs** are built by using 3-level **NPC** arms like the one shown in ***Fig. 13(b)*** and the 4-level **MPC** converter is based on a conventional 4-level **NPC** topology with practicable DC bus mid-points, 54 switches (34 IGBTs and 20 clamping diodes) are required, which is a significant parts reduction when compared with the 126 switches (66 IGBTs and 60 diodes) employed for the classical three-phase 12-level **NPC** counterpart.

### Brief Description of Drawings

***Fig. 1***: General structure of classical multilevel topologies (one phase leg). (a) Diode-Clamped Multilevel (DCML) converter. (b) Flying Capacitor Multilevel Converter (FCMC). (c) the Cascade Multilevel or Cascaded H-Bridge (CHB) multilevel converter.
***Fig. 2:*** (a) Generalized 5-level inverter topology (one phase leg) [3], [20]. (b) Hybrid-clamped 5-level inverter topology (one phase leg) [21].
***Fig.3******:*** Stacked multicell (SMC) 7-level converter (one phase leg) [22].
***Fig. 4******:*** General configuration of an M²C with common DC bus voltage (one phase leg) [4], [12], [24].
***Fig.5******:*** The cascaded two-level (CTL) converter (one phase leg) [25].
***Fig. 6*****:** Hybrid voltage-sourced converters (VSC) (one phase leg). (a) For standard 3-winding transformer [26]. (b) For a transformer with isolated secondary windings or for three single-phase transformers [27], [28].
***Fig. 7******:*** Three-level neutral-point-clamped (3L-NPC) DC-AC converter. (a) Circuit configuration. (b) Simplified schematic diagram with ideal switches.
***Fig.8*****:** Hybrid 4-Level (combined 2-level with 3-level NPC) three-phase inverter [32].
***Fig. 9******:*** Multilevel converter topologies (one phase leg) with reduced amount of clamping diodes. (a) 5-level [33] and (b) 7-level [34] DC-AC converters.
***Fig. 10******:*** ANPC multilevel inverters (one phase leg) [2]. (a) 3L- ANPC [29]. (b) Hybrid 5L-ANPC (3L-ANPC combined with a 3L-FC) [35], [36]. (c) Hybrid 9L-ANPC (combined CCC stage with a 5L-ANPC) [37].
***Fig. 11*****:** Block diagram of the general structure of the multilevel-clamped multilevel converter **(MLC²)** with m multilevel clamping units **(MCUs)** and *n* (*=ml*+*2*) levels. Each **MCU** {3} contributes with /-levels to the resultant **MLC²** structure. The **MCUs** associated with the DC/AC **MPC** power converter {7} composes the **MLC².** The arrangement of **MCUs** can be a front-end or a per-phase set-up applied to the **MPC** power converter.
***Fig.12******:*** Block diagram of the general concept of the multilevel clamping concept, where *V*ₐ *{8}* represents one phase voltage of the multilevel-clamped multilevel DC-AC converter (**MLC²**). Each **MCU** {3} contributes with /-levels to the resultant MLC² phase voltage {8}. The clamping points {4} correspond to the mid-points of the power switch leg {11} of the DC/AC **MPC** power converter {7}.
***Fig. 13:*** (a) Simplified schematic of the **TCC** using ideal switches of the **TCC.** (b) Implementation of the **TCC** based on a single-phase three-level neutral-point clamped **(NPC)** topology. (c) Implementation of the **TCC** based on a single-phase three-level neutral-point piloted **(NPP)** topology [39].
***Fig. 14*****:** Front-end **MCU** with two **TCCs** performing as a single-phase 5-level **MLC².**
***Fig. 15*****:** Three-phase 5-level **MLC²** based on three single-phase front-end **MCUs.**
***Fig. 16******:*** Three-phase three-level clamping cell **(TTCC).**
***Fig. 17*****:** Modular three-phase **5-level MLC².**
***Fig. 18******:*** Modular **9-level MLC².** (a) Single-phase scheme based on four series-connected **TCCs.** (b) Three-phase scheme based on four series-connected **TTCCs.**
***Fig. 19******:*** Modular three-phase **6-level MLC²** based on two series-connected **TTCCs** and one three-phase two-level full-bridge **(TTFB).**
***Fig. 20******:*** Three-phase **5-level MLC²** based on three front-end **TCCs** with common clamping.
***Fig. 21******:*** Three-phase **5-level MLC²** based on a front-end **TTCC** with common clamping.
***Fig. 22*****:** Three-phase **7-level MLC²** based on a front-end **TTCC** with common clamping.
***Fig. 23*****:** Three-phase **6-level MLC²** based on a front-end **TTCC** with common clamping managed by a **MCU** consisting of a **TCC** and a two-level half-bridge **(THB).**
***Fig.24******:*** Three-phase common clamped **12-level MLC²** based on 4-level **MPC** power converter and two **MCUs** with two **TCCs** each of them.
***Fig. 25*****:** Preferred embodiment of the three-phase **modular 5-level MLC².**
***Fig. 26*****:** Output phase voltages of the three-phase **modular 5-level MLC²** referred to the mid-point of the DC bus voltage, according to the preferred embodiment of Fig. 25.
***Fig. 27*****:** Preferred embodiment of the three-phase **5-level MLC² with common clamping.**
***Fig. 28******:*** Output phase voltages of the three-phase **5-level MLC² with common clamping** referred to the mid-point of the DC bus voltage, according to the preferred embodiment of Fig. 27.
***Fig. 29*****:** Preferred embodiment of the three-phase **7-level MLC² with common clamping.**
***Fig. 30******:*** Output phase voltages of the three-phase **7-level MLC² with common clamping** referred to the mid-point of the DC bus voltage, according to the preferred embodiment of Fig. 29.

### Description of the Preferred Embodiments of the Invention

The **main object of this invention** has been presented so far in terms of a set of elements namely, the multilevel-clamping unit **(MCU),** the three-level clamping cell **(TCC)** and the three-phase three-level clamping cell **(TTCC),** and on how they interrelate to form up different circuits of DC-AC multilevel-clamped multilevel converters **(MLC²).** In this Section the preferred embodiments of this invention are described. Although this invention can be applied for accomplishing multiphase **MLC²** converters with any number of levels, 5-level and 7-level structures for three-phase applications are considered only for the preferred embodiments, because it is more advantageous from the viewpoint of required number of power switches and power processing capability. The preferred embodiments of the **MLC²** considered here are based on **TCCs** and **TTCCs** with neutral-point clamped **(NPC)** technology with practicable clamping points, like the one shown in ***Fig. 13(b)******,*** since this technology has been already well-known in the market, and consequently this makes the whole structure of the **MLC²** and its controls a lot simpler.

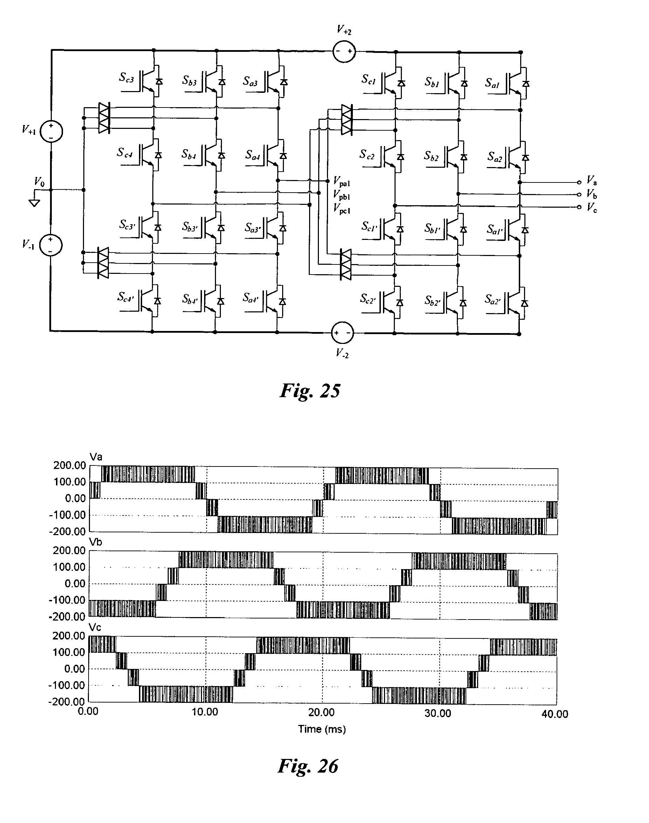

***Fig. 25*** presents the preferred embodiment of the three-phase **modular 5-level MLC²** and in ***Fig. 26*** the corresponding output phase voltages referred to the mid-point of the DC bus voltage. The total number of semiconductors is reduced (24 power switches and 12 diodes) when compared with the conventional NPC counterpart (24 power switches and 18 clamping diodes).

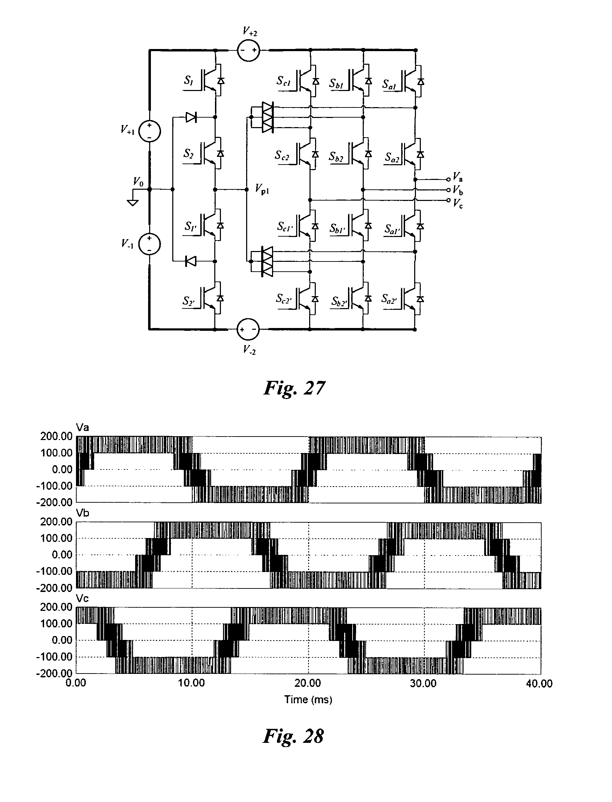

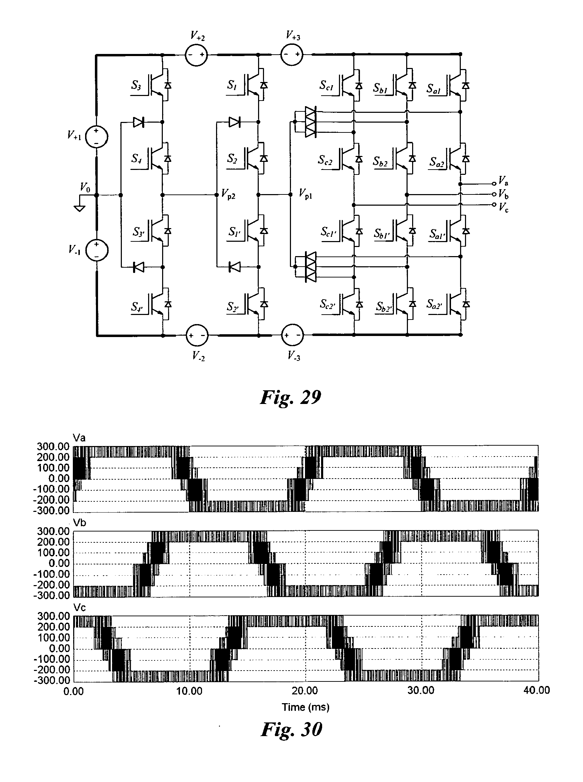

The preferred embodiment of the three-phase 5-level **MLC² with common clamping** is shown in ***Fig. 27*** and its corresponding output phase voltages referred to the mid-point of the DC bus voltage are shown in ***Fig. 28*****.** It can be seen in this figure that the total number of power switches and diodes are significantly reduced (16 power switches and 8 diodes) when compared with the conventional NPC counterpart (24 power switches the mid-point of the DC bus voltage are shown in ***Fig. 30****.* This preferred embodiment is remarkably advantageous in terms of reduced parts (20 power switches and 10 clamping diodes) when compared with the classical NPC counterpart (36 power switches and 30 clamping diodes).

## Claims

1. The **multilevel clamping method,** which allows extending the number of voltage levels generated at the output of a DC-AC multipoint clamped **(MPC)** multilevel power conversion structure by conveying three or more voltage levels to each of the selected **MPC** power converter clamping points; wherein such clamping points correspond to the mid-points of the power switching legs that commonly form up the **MPC** multilevel power converters; and wherein the number of clamping points depends on the type of power conversion topology.

2. The **multilevel-clamped multilevel converter (MLC²)** implementing the multilevel clamping method claimed in Claim 1, which comprises one or more multilevel clamping units **(MCU)** and one or more front-end multipoint clamped **(MPC)** DC-AC multilevel power conversion units; wherein each **MCU** is a dedicated power processing circuitry that allows multiplexing a given number of voltage levels from the DC voltage sources that compose the DC bus voltage toward the clamping points of the DC-AC **MPC** power conversion units; and wherein the DC-AC **MPC** power conversion units can be either single-phase or multi-phase stages operating as DC-AC front-end power processors, whose power switching legs provide the auxiliary clamping points as described in Claim 1, whereby the connection between the **MCUs** and the **MPC** power conversion units is possible.

3. The multilevel-clamped multilevel converter **(MLC²)** claimed in Claim 2 wherein the multilevel clamping units **(MCU)** are implemented by one or more series-connected **three-level clamping cells (TCC);** wherein each **TCC** is an elementary building block with a three-input/three-output terminals structure comprising two DC sources and one single-pole/triple-throw power switches arrangement with four terminals; wherein the negative and positive terminals of one of the DC sources are connected between the top input and output terminals of the **TCC,** respectively, whereas the positive and negative terminals of the other DC source are connected between the bottom input and output terminals of the **TCC,** respectively, and the common terminal of the single-pole/triple-throw power switches arrangement is connected to the mid output terminal of the **TCC,** while its other three terminals are connected to the top output, mid input, and bottom output terminals of the **TCC,** respectively; wherein the last series-connected **TCC** in the **MCU** has its three input terminals short-circuited and the first series-connected **TCC** has its mid output terminal connected to a clamping point of the front-end DC-AC **MPC** power conversion structure; and wherein each DC voltage source can be capacitor-type, battery or any other kind of DC voltage source.

4. The multilevel-clamped multilevel converter **(MLC²)** claimed in Claim 2 wherein the multilevel clamping units **(MCU)** are implemented by one or more series-connected three-level clamping cells **(TCC)** and one conventional two-level half-bridge **(THB);** wherein the **THB** is a standard circuitry with a DC voltage source and a power switch arrangement with three output terminals, i.e., the top DC bus terminal, the switched mid terminal and the bottom DC bus terminal, are one by one connected to the three input terminals of the last series-connected **TCC** in the **MCU,** whereby an even number of voltage levels are conveyed to the output terminal of the **MCU.**

5. The multilevel-clamped multilevel converter **(MLC²)** claimed in Claim 2 wherein the multilevel clamping units **(MCU)** are implemented by one or more series-connected **three-phase three-level clamping cells (TTCC);** wherein each **TTCC** is an elementary three-phase building block with a five-input/five-output terminals structure comprising two DC sources and three single-pole/triple-throw power switch arrangements; wherein the negative and positive terminals of one of the DC sources is connected between the top input and output terminals of the **TTCC,** respectively, whereas the positive and negative terminals of the other DC source is connected between the bottom input and output terminals of the **TTCC,** respectively, and the three common terminals of the three single-pole/triple-throw power switch arrangements are per-phase connected to the three per-phase mid output terminals of the **TTCC,** respectively, while their other three terminals of each of the three single-pole/triple-throw power switch arrangements are per-phase connected to the top output, per-phase mid input, and bottom output **TTCC** terminals, respectively; wherein the last series connected **TTCC** in the **MCU** has its five input terminals short-circuited and the first series-connected **TTCC** has its three mid output terminals per-phase connected to three clamping points of the front-end DC-AC **MPC** power conversion structure; and wherein each DC voltage source can be capacitor-type, battery or any other kind of DC voltage source.

6. The multilevel-clamped multilevel converter **(MLC²)** claimed in Claim 2 wherein the multilevel clamping units **(MCU)** are implemented by one or more series-connected three-phase three-level clamping cells **(TTCC)** and one conventional three-phase two-level full-bridge **(TTFB);** wherein the **TTFB** is an standard circuitry with a DC voltage source and a power switches arrangement with five output terminals, i.e., the top DC bus terminal, the three switched mid terminals and the bottom DC bus terminal, which are one by one connected to the five input terminals of the last series-connected **TTCC** in the **MCU,** whereby an even number of voltage levels are conveyed to the output terminals of the **MCU.**

7. The multilevel-clamped multilevel converter **(MLC²)** claimed in Claim 2 wherein each multilevel clamping unit **(MCU)** operates as a per-phase circuitry arrangement, whose input terminals are connected to a given number of DC bus mid-points and its output is connected to a clamping point in each phase leg of the DC-AC **MPC** power conversion structure, wherewith the clamping action is independently performed for each phase leg, whereby the voltage levels are provided to each phase output voltage waveform.

8. The multilevel-clamped multilevel converter **(MLC²)** claimed in Claim 2 wherein the clamping points of the phase legs of the DC-AC **MPC** power conversion structure are interconnected each other, resulting in a number of common clamping points, being input terminals of each multilevel clamping units **(MCU)** connected to a given number of DC bus mid-points and its output connected to one of the aforementioned common clamping points, wherewith a common clamping action for all of the phase legs of the DC-AC **MPC** power conversion structure is performed, whereby the voltage levels are provided to all of the output voltage waveforms.

9. The single-phase implementation of the multilevel-clamped multilevel converter **(MLC²)** claimed in Claim 2 wherein a three-level clamping cell **(TCC)** performs as a front-end multipoint clamped **(MPC)** DC-AC three-level power conversion unit; wherein the three input terminals of the front-end DC-AC **TCC** are one by one connected to the three output terminals of the first **TCC** forming the multilevel clamping unit **(MCU)** described in Claims 3 or 4.

10. The three-phase implementation of the multilevel-clamped multilevel converter **(MLC²)** claimed in Claim 2 wherein a three-phase three-level clamping cell **(TTCC)** performs as a three-phase front-end multipoint clamped **(MPC)** DC-AC three-level power conversion unit; wherein the five input terminals of the front-end DC-AC **TTCC** are one by one connected to the five output terminals of the first **TTCC** forming the multilevel clamping unit **(MCU)** described in Claims 5 or 6.
